# EUROPEAN PATENT APPLICATION

(11) **EP 4 834 109 A1**
(43) Date of publication of application: **04.11.2026**
(21) Application number: 25173748.2
(22) Date of filing: 30.04.2025
(51) Int. Cl.: A21D 2/18, A21D 13/062, A21D 13/40, A23L 27/30, A23L 29/30, A23L 33/125, A23L 33/21

(54) **COMPOSITIONS FOR REDUCED SUGAR BAKERY PRODUCTS**

(71) Applicant: Cargill, Incorporated, Wayzata, Minnesota 55391 (US)
(72) Inventor: Aernouts, Kim, Emblem (BE); Bensouissi, Abdelfattah, Braine-l'Alleud (BE); Van Den Steen, Kristine, Wieze (BE)
(74) Representative: Cargill IP Department

(57) **Abstract**

Described herein are sucrose replacement composition comprising 15 wt% - 25 wt% erythritol; 40 wt% - 50 wt% maltitol; 34 wt% - 36 wt% soluble fiber; and 0.1 wt% - 0.25 wt% steviol glycoside. The sucrose replacement composition may be used in bakery products, for example, as a complete 1:1 replacement for sucrose in said bakery products.

## Description

### CROSS-REFERENCE TO RELATED APPLICATIONS

Not applicable

### BACKGROUND

Sucrose, commonly referred to as table sugar, is a sweet crystalline solid ingredient with multiple functions when added into food applications. For example, sucrose modifies flavor properties (e.g., masking bitterness and balancing acidity), and enhances texture and appearance (e.g., syrupy mouth feel and jelly like texture). Chemically, sucrose caramelizes when heated and interacts with amino acids in Maillard browning reactions contributing important color and texture attributes when used in cooking, baking, and other food applications involving heat. Sucrose also play an important role in food applications involving polymerization (e.g., things involving gelation and the like) as well as altering the water activity. Accordingly, when considering replacing table sugar, sucrose, in food application, more than the sweetening properties need to be considered and sugar replacement remains a challenge in the food industry. In particular, in spaces such as bakery, where the physical, chemical, and sensory properties of sucrose are critical to food application, there remains a need to suitable compositions to replace not only the sweetness of sucrose, but also the physical and chemical properties that contribute to those applications.

### SUMMARY

The present disclosure provides sucrose replacement compositions including 15 wt% - 25 wt% erythritol; 40 wt% - 50 wt% maltitol; 34 wt% - 36 wt% soluble fiber; and 0.1 wt% - 0.25 wt% steviol glycoside. When used in a bakery product in place of sucrose, the bakery product has the same sweetness, crumb porosity, softness, resilience, bite firmness, and/or moistness as an equivalent bakery product prepared with sucrose. The composition may comprise or consist essentially of 19 wt% to 21 wt%, preferably about 20wt%, erythritol; 44 wt% to 46 wt%, preferably about 45wt%, maltitol; about 35 wt% soluble fiber; and about 0.2 wt% steviol glycoside.

The steviol glycoside may comprise rebaudioside M, rebaudioside D, rebaudioside A, rebaudioside B, rebaudioside C, stevioside, or combinations thereof. The steviol glycoside may comprise a blend of rebaudioside D and rebaudioside M, preferably wherein rebaudioside D and rebaudioside M are at least 80 wt%, at least 85 wt%, at least 90 wt%, or at least 95% of total steviol glycosides in the sucrose replacement composition.

The soluble fiber may comprise at least 70 wt% fiber. The soluble fiber may comprise 0 wt% to less than 15 wt% of residual sugars with a degree of polymerization of 1 or 2 (DP1 or DP2). The soluble fiber may comprise about 15 wt% to about 30 wt% digestible sugars with a degree of polymerization of 3 or higher (DP ≥3). The soluble fiber may be selected from the group consisting of resistant dextrin, polydextrose, inulin, fructo-oligosaccharides, galacto-oligosaccharides, mannan oligosaccharides, and combinations thereof. The soluble fiber may be resistant dextrin.

The sucrose replacement compositions described herein may be a powdered mixture, wherein at least 10% by volume of particles in the mixture have a particle size less than about 30 µm, at least 50% by volume of the particles in the mixture have a particle size less than about 180 µm, and/or at least 90% by volume of the particles in the mixture have a particle size less than about 670 µm. The sucrose replacement compositions described herein may be in the form of agglomerated granules, wherein at least 10% by volume of the particles have a particle size less than about 110 µm, at least 50% by volume of the particles have a particle size less than about 220 µm, and/or at least 90% by volume of the particles have a particle size less than about 540 µm.

The disclosure also provides a bakery product comprising the sucrose replacement composition described herein. The bakery product may comprise flour, salt (e.g. NaCl, KCl), a leavening agent (e.g., baking powder, baking soda, ammonium bicarbonate), yeast, egg, oil and/or fat, milk or milk replacers, flavorings, extracts, inclusions, or combinations thereof. The bakery product may be selected from the group consisting of a pie, a bread, a cake, a muffin, a bun, a donut, a waffle, a pastry, a pretzel, a biscuit, a biscuit sandwich, a sandwich cookie, a pie cookie, an extruded cookie, a puff pastry, a croissant, a brioche, and a crepe.

The disclosure further provides a use of the sucrose replacement composition described herein as a replacement for sucrose in a bakery product. The sucrose replacement composition can be used as a one-for-one weight replacement of sucrose in the bakery composition and no other sweeteners or bulking agents need to be added to replace the physical, chemical, or sensory properties of sucrose in the bakery product.

### BRIEF DESCRIPTION OF THE DRAWINGS

This patent or application contains at least one drawing executed in color. Copies of this patent or patent application publication with color drawings will be provided by the Office upon request and the payment of the necessary fee.

The drawings illustrate generally, by way of example, but not by way of limitation, various aspects discussed herein.

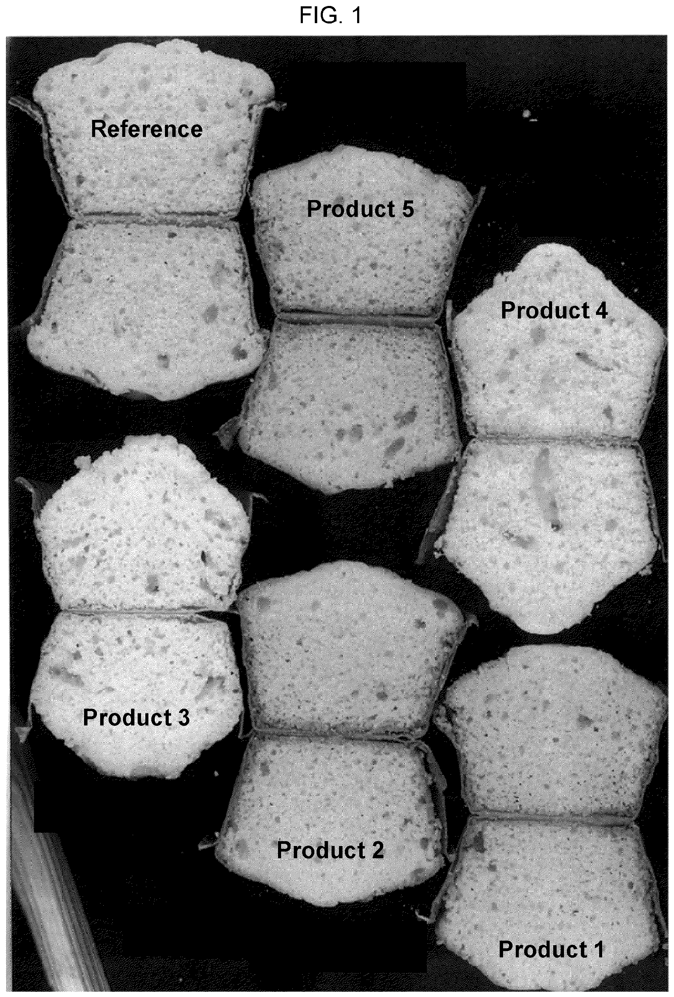

FIG. 1 shows a photo of muffins prepared with sucrose or with various sucrose replacements as outlined in Example 3.
FIG. 2 shows a spider chart of sensory properties and attributes of the muffins outline in Example 3.
FIG. 3 shows a spider chart of sensory properties and attributes of the muffins outline in Example 3.
FIG. 4 shows a spider chart of sensory properties and attributes of the muffins outline in Example 3.
FIG. 5 shows particle size distribution for sweeteners used in Example 3.
FIG. 6 shows scanning electron microscopy images at 100X and 400X of the powdered sucrose replacement composition described in Example 3.
FIG. 7 shows scanning electron microscopy images at 100X and 400X of the agglomerated sucrose replacement composition described in Example 3.

### DETAILED DESCRIPTION

Reference will now be made in detail to certain aspects of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

In this document, the terms "a," "an," or "the" are used to include one or more than one unless the context clearly dictates otherwise. The term "or" is used to refer to a nonexclusive "or" unless otherwise indicated. All publications, patents, and patent documents referred to in this document are incorporated by reference herein in their entirety, as though individually incorporated by reference. In the event of inconsistent usages between this document and those documents so incorporated by reference, the usage in the incorporated reference should be considered supplementary to that of this document; for irreconcilable inconsistencies, the usage in this document controls.

Values expressed in a range format should be interpreted in a flexible manner to include not only the numerical values explicitly recited as the limits of the range, but also to include all the individual numerical values or sub-ranges encompassed within that range as if each numerical value and sub-range were explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

Unless expressly stated, ppm (parts per million), percentage, and ratios are on a by weight basis. Percentage on a by weight basis is also referred to as wt% or % (wt) below.

This disclosure relates to compositions that can be used as drop-in replacements for sucrose in bakery applications. The present application demonstrates the surprising results found using these compositions that can not only replace the sweetness of sucrose in the bakery applications but can also effectively replace the other sensory properties of sucrose along with the physical and chemical properties of sucrose in bakery products. The sucrose replacement compositions include erythritol, maltitol, soluble fiber, and one or more steviol glycosides.

The sucrose replacement compositions include about 15 wt% to 25 wt%, about 16 wt% to 24 wt%, about 17 wt% to 23 wt%, about 18 wt% to 22 wt%, about 19 wt% to 21 wt%, or about 20 wt% erythritol. The erythritol may be from any suitable source as would be recognized by one of ordinary skill in the art. In general, the erythritol will be in the form of a dry crystalline powder before it is used to prepare the sucrose replacement compositions described herein.

The sucrose replacement compositions include about 40 wt% to 50 wt%, about 41 wt% to 49 wt%, about 42 wt% to 48 wt%, about 43 wt% to 47 wt%, about 44 wt% to 46 wt%, or about 45 wt% maltitol. The maltitol may be from any suitable source as would be recognized by one of ordinary skill int eh art. In general, the maltitol will be in the form of a solid powder before it is used to prepare the sucrose replacement compositions described herein.

The sucrose replacement compositions include about 34 wt% to 36 wt%, or about 35wt% soluble fiber. Suitable soluble fibers include, but are not limited to, resistance dextrin, polydextrose, inulin, fructo-oligosaccharides, galacto-oligosaccharides, mannan oligosaccharides, combinations thereof, and the like. In general, suitable soluble fibers are those that include (i) less than 15 wt% residual sugars with a degree of polymerization (DP) of 1 or 2; (ii) a fiber content of at least 70 wt%; and (iii) the remaining wt% being digestible sugars with a DP greater than 3. It is also preferable that the soluble fiber should not have a strong off taste. Suitable soluble fibers will be in particulate form, for example, a dry powder, before they are used to prepare the sucrose replacement compositions described herein.

The soluble fiber used in the sucrose replacement compositions described herein may be resistant dextrin. The sucrose replacement compositions may include about 34 wt% to 36 wt%, or about 35 wt%, resistant dextrin. As used herein, "resistant dextrin" refers to dextrins that are resistant or partially resistant to the digestive enzymes present in the small intestine. Resistant dextrins contain α-1,2 and α-1,3 glycosidic bonds in addition to the α-1,4 and α-1,6 glycosidic bonds, which for example are also present in starch. The resistant dextrin also contains reducing terminuses of the resistant dextrin which may contain β-1,6 glycosidic bonds. The α-1,3, α-1,2, and α-1,6 glycosidic bonds cannot be decomposed by various digestive enzymes in the human body, contributing to enzyme resistance. In general, resistant dextrin has reduced molecular weight relative to starch polymers and can be obtained by hydrolyzing and random branching of glucose chains or polymerizing glucose syrups in the presence of an acid catalyst at high temperature. A portion of the resistant dextrin is not digestible in the upper portion of the human gastrointestinal tract but may be partially hydrolyzed by the bacterial flora in the colon, releasing free fatty acids. Suitable resistant dextrin may be from any source. For example, several suitable resistant dextrin products are available commercially, such as Promitor^{®} grades from Tate & Lyle, Nutriose^{®} grades from Roquette, and Fibersol^{®} grades from ADM/Mitsutani. The resistant dextrin may be obtained according to the process described in WO2011/091962, which is incorporated herein by reference. In general, the resistant dextrin will be in the form of a dry powder before it is used to prepare the sucrose replacement compositions described herein.

The sucrose replacement compositions include about 0.05wt% to 0.35wt%, about 0.1wt% to 0.25wt%, or about 0.15wt% to 0.22wt% of one or more steviol glycosides. The sucrose replacement composition may include rebaudioside M, rebaudioside D, rebaudioside A, rebaudioside B, rebaudioside C, stevioside, or combinations thereof. The steviol glycosides may be isolated from leaves of *Stevia rebaudiana,* may be produced by fermentation of an engineered microorganism, or may be produced enzymatically from plant derived steviol glycosides and further isolated. For example, rebaudioside D and M can be produced by an engineered organism and then isolated to produce a steviol glycoside component of primarily rebaudioside D and rebaudioside M as the predominant steviol glycoside species.

Rebaudioside M, rebaudioside D, or both, can be present in the steviol glycoside sweetener in a total amount of about 80% (wt) or greater (e.g., RM80), 90% (wt) or greater (e.g., RM90), 95% (wt) or greater (e.g., RM95), or 99% (wt) or greater of a total amount steviol glycosides in the sucrose replacement composition. Rebaudioside M can be the predominant steviol glycoside in the sucrose replacement composition, and can be present, for example, in an amount in the range of about 50% to about 95%, about 70% to about 90%, or about 75% to about 85% of the total amount of steviol glycosides in the sucrose replacement composition. Rebaudioside D can be in an amount less than Rebaudioside M, such as in an amount in the range of about 5% to about 25%, about 10% to about 20%, or about 10% to about 15% of the total amount of steviol glycosides in the sucrose replacement composition. For example, the sweetener can comprise mostly rebaudioside M and/or D and can include one or more of rebaudioside A, rebaudioside B, or stevioside in an amount of about 5% (wt) or less, about 2% (wt) or less, or about 1% (wt) or less, of a total amount steviol glycosides in the steviol glycoside component.

Rebaudioside A can be present in the steviol glycoside sweetener in an amount of about 40% (wt) or greater, 50% (wt) or great (e.g. RA50), 60% (wt) or greater (e.g., RA60), 80% (wt) or greater (e.g., RA80), 95% (wt) or greater (e.g., RA95), or 99% (wt) or greater of a total amount of steviol glycosides in the sucrose replacement composition.

The sucrose replacement compositions are prepared by mixing erythritol, maltitol, soluble fiber, and steviol glycosides. Any method suitable for mixing dry ingredients can be utilized, including but not limited to a powder blender, stirring, whisking, tumbling, sifting, and the like. The erythritol, maltitol, soluble fiber, and steviol glycosides should be mixed until they are thoroughly combined and evenly distributed. When in a powdered form, the sucrose replacement composition may have a particle size distribution such that at least 10% by volume of the particles are less than about 30 µm, at least 50% by volume of the particles are less than about 180 µm, and/or at least 90% by volume of the particles are less than about 670 µm, as measured by laser light diffraction reported as a particle size distribution of the equivalent diameter measured in µm.

The sucrose replacement compositions may also be in a granular or agglomerated form. For example, the steviol glycoside and soluble fiber may be dissolved in water to form an aqueous solution that can then be applied to the maltitol and erythritol using a fluid bed granulator. When in the agglomerated form, the sucrose replacement composition may have a particle size distribution such that at least 10% by volume of the particles are less than about 110 µm, at least 50% by volume of the particles are less than about 220 µm, and/or at least 90% by volume of the particles are less than about 540 µm, as measured by laser light diffraction reported as a particle size distribution of the equivalent diameter measured in µm.

The sucrose replacement compositions can be used in food and beverage products. In particular, it is advantageous to use the sucrose replacement compositions in bakery products. In general, bakery products are food products prepared from flour or meal derived from a grain product. Bakery products will generally be prepared from a batter or a dough, and the sucrose replacement compositions will generally be placed in the batter or dough in a direct one-for-one weight replacement of sucrose. In addition to flour and the sucrose replacement, the baker product may include salt (e.g. NaCl, KCl), a leavening agent (e.g., baking powder, baking soda, ammonium bicarbonate), yeast, egg, oil and/or fat, milk or milk replacers, flavorings, extracts, inclusions, and combinations thereof. Suitable bakery food products may include, but are not limited to, pie, bread, cakes, muffins, buns, donuts, waffles, pastries, pretzels, biscuits, biscuit sandwiches, sandwich cookies, pie cookies, extruded cookies, puff pastries, croissant, brioches, crepes, and the like. The sucrose replacement compositions may be included in a food product, such as a bakery product, that is unbaked, baked, or partially baked.

In general, the sucrose replacement compositions described herein will be used as direct replacement for sucrose in bakery product such that the entire weight of sucrose in the bakery product is replaced with the same weight of the sucrose replacement composition. This may be described as a 1 for 1 or 1:1 replacement. For example, the bakery product would contain 20g sucrose, 20 g of the sucrose replacement composition is used.

When the sucrose replacement compositions described herein are used in bakery products, the resulting bakery products will have the same sweetness, crumb porosity, firmness at touch, resilience, bite firmness, and/or moistness as an equivalent bakery product prepared with sucrose. For the sake of comparison, "an equivalent bakery product" refers to the same bakery product prepared with the same formulation and in the same method with the only difference being the ingredient called out in the comparison. If the comparison is between a bakery product with sucrose and a bakery product with the sucrose replacement compositions described herein, that is the only difference in the formulation when the two are compared for physical and sensory attributes.

The attribute of crumb porosity refers to the proportion of pore volume to total crumb volume in a bakery product. During baking, air bubbles form in the batter or dough and become trapped forming spongelike pores in the crumb of the bakery product. The crumb porosity will generally be evaluated on a scale from fine to open, with fine crumb porosity having small, fine pores in the crumb and open crumb porosity having larger open pores in the crumb. The crumb porosity may be evaluated relative to a reference sample such that the crumb porosity is described as finer (smaller pores) or more open (larger pores) than the reference sample.

The attribute of firmness can be evaluated both by touching the product (firmness by touch) and/or when the product is bitten into (firmness at bite or bite firmness). To evaluate the firmness of the bakery product by touch, pressure can be applied with the fingers on the crumb of the bakery product. To evaluate the bite firmness of the bakery product, the firmness is evaluated while biting into the crumb of the bakery product. The firmness may be evaluated relative to a reference sample such that the firmness (by touch or at bite) is described as softer or firmer than the reference sample.

The attribute of resilience refers to the ability of the bakery product to retain or return to its shape after applying pressure. Resilience can be evaluated by applying pressure to the crumb of the bakery product and observing how long it takes the crumb to recover to its initial position. The resilience may be evaluated relative to a reference sample such that the resilience is described as longer (more time to recover to the initial position) or shorter (less time to recover to the initial position) than the reference sample.

The attribute of moistness is evaluated while biting and chewing the bakery product. Moistness may also be described as mouth feel or texture of the bakery product. The moistness of a bakery product may be evaluated relative to a reference sample such that the moistness is described as dryer (less moist) or moister than the reference sample.

Sweetness generally refers to the sensory attributes of sweetness intensity (how intense is the sweetness), the onset of sweetness (how long does it take to taste "sweet"), time at peak sweetness (how long does the sweetness intensity last at its peak), and sweetness linger (how long does the sweetness last after peak sweetness). Sweetness onset, time at peak sweetness, and sweetness linger may collectively be referred to as the temporal aspects of sweetness. These sensory attributes are usually defined based on the sweetness attributes of a solution of sucrose. These sensory attributes may be measured relative to a sucrose solution, for example evaluating if a sample has more or less sweetness intensity than a sucrose solution reference. Theses sensory attributes may also be measured on a scale in comparison to several sucrose solution samples, for example, a scale of 0 to 6, where 0 is the sweetness of water alone and 6 being the sweetness of a very concentrated solution of sucrose, with the scores in between representing gradual increases in sucrose concentration. The sweetness intensity may be evaluated relative to a reference sample such that the sweetness is described as a lower or higher sweetness intensity than the reference sample.

The attributes of crumb porosity, firmness at touch, bite firmness, resilience, moistness, and sweetness can be evaluated by a sensory panel. Sensory panels are a scientific and reproducible method that is essential to the food and beverage industry. A sensory panel involves a group of two or more individual panelists. Panelists are instructed according to industry-recognized practices to avoid the influence of personal subjectivity and strengthen reproducibility. For example, panelists may objectively evaluate physical and sensory attributes of a tested product but may not provide subjective attributes such as personal preference. **In** various aspects, the sensory panel can be conducted with two, three, four, five, six, or more panelists, in which the panelists identify and agree on a lexicon of sensory attributes for a given set of samples. After evaluating a specific sample, the panelists can assign a numerical intensity score for each attribute using an intensity scale. For example, intensity scales can range from 0 to 6 (i.e., 0=not detected, 1=trace, 2=slight, 3=moderate, 4=definite, 5=strong, 6=extreme), 0 to 9 (i.e., 0=not detected, 1=trace, 2=faint, 3=slight, 4=mild, 5=moderate, 6=definite, 7=strong, 8=very strong, 9=extreme), or 0 to 15, where 0 corresponds to the absence of the attribute, while 6, 9, or 15, respectively, corresponds to the upper bound extreme occurrence of the attribute. Additionally or alternatively, scoring can be done relative to one or more reference samples. The panel may use a roundtable consensus approach, or the panelists may score and evaluate the sensory attribute(s) individually. Either format can further involve a panel leader who directs the discussion regarding terminology and directs the panel to evaluate particular products and attributes. In other aspects, a trained sensory panel can be utilized to assess specific attributes using descriptive analysis or time intensity methodologies.

As used herein, "panelist" refers to a highly trained expert taster, such as those commonly used for sensory methodologies such as descriptive analysis, and/or an experienced taster familiar with the sensory attribute(s) being tested. In some aspects, the panelist may be a trained panelist. A trained panelist has undergone training to understand the terms and sensory phenomenon associated with those sensory attributes relevant to the tested product and are aligned on the use of common descriptors for those sensory attributes of interest (i.e., a sensory lexicon). For example, a trained panelist testing a given composition will understand the terms and sensory attributes associated with said composition, e.g. crumb porosity, firmness, resilience, moistness, sweetness, and the like. The trained panelist will have been trained against reference samples corresponding to the sensory attributes being tested and thus have calibrated to recognize and quantitatively assess such criteria. In some aspects, the panelist may be an experienced taster.

As used herein, "roundtable consensus approach" refers to the sensory panel assay methodology wherein panelists discus sensory attributes and intensities before mutually agreeing on an intensity score and attribute characterization for the particular sensory attribute(s) being assayed. A sensory panel using a roundtable consensus approach may include 2, 3, 4, 5, 6, or more panelists. For a given set of samples, the panelists will identify and agree on a lexicon of sensory attribute, including, if applicable, reference or standardized samples (also referred to as sensory anchors) for a particular sensory attribute. The reference sample(s) used for a given sensory attribute(s) will depend on the samples being assayed and the lexicon of sensory attributes determined by the panel. One of skill in the art will recognize the appropriate lexicon and reference or standard samples necessary for sensory assessment of a given sample(s).

In some aspects, the samples are scored and evaluated by panelists independently after panelists have agreed upon or been instructed in a lexicon of sensory attributes and intensity scores including, if applicable, assay specific calibration on reference samples (also referred to as sensory anchors) for a particular sensory attribute. For example, sucrose solutions may be used as reference samples for the sensory attribute of sweetness. Panelists may evaluate samples in replicate and may be blinded to the samples they are testing. Samples being tested may be provided to the panelists randomly or in a sequential order. Scores from individual panelists are then assessed using standard statistical analysis methods to determine an average score. One of skill in the art will recognize the appropriate lexicon and reference or standard samples necessary for sensory assessment of a given sample(s) as well as the appropriate statistical analysis methods.

### EXAMPLES

The invention is further described in detail by reference to the following experimental examples. These examples are provided for purposes of illustration only and are not intended to be limiting unless otherwise specified. Thus, the invention should in no way be construed as being limited to the following examples, but rather should be construed to encompass any and all variations which become evident as a result of the teaching provided herein.

### Example 1 - Sucrose replacement ingredient modeling

To better understand the physical, chemical, and sensory properties functions of sucrose in food applications, ten (10) criteria were chosen and evaluated. These criteria are listed in Tables 1 and 2 and include relative sweetness, cooling/heating effect, after taste, digestive tolerance, crystallinity, amorphous state, solubility at 25 °C, bulking ability (combination of solubility and molecular weight), browning, and moistening. The sensory property of aftertaste was scored on a scale of -1 to +3, with +1 being no aftertaste, -1 and 0 being it generates an aftertaste, and +2 and +3 being it positively enhances taste and offsets the aftertaste. The bulking ability ("bulk") was scored on a scale of 0 to 100, with 0 being no bulking ability and 100 being a match to the bulking properties of sucrose (i.e., there are no limitations on solubility and when in solution at an equivalent dry substances concentration, the solution has an equivalent viscosity to that of a solution of sucrose). The browning and moistening properties were scored on a scale of 0 to 100 with 0 being no browning/moistening and 100 being significant susceptibility to form color (browning) or very hydroscopic (moistening).

In addition to sucrose, seven (7) ingredients were evaluated using the same criteria to judge their suitability as sucrose replacements. These ingredients included maltitol, erythritol, sorbitol, mannitol, isomalt, a blend of steviol glycosides containing greater than 85 wt% rebaudioside M and about 3-15 wt% rebaudioside D ("SG blend"), and a soluble fiber ("soluble fiber"). Table 1 shows the criteria values for sucrose and the seven evaluated ingredients and Table 2 shows all criteria values scored as a percentage relative to sucrose.

**Table 1.**

| Criteria | Sucrose | Maltitol | Soluble Fiber | SG Blend | Erythritol | Sorbitol | Mannitol | Isomalt |
|---|---|---|---|---|---|---|---|---|
| Relative Sweetness (% sucrose) | 100 | 90 | 10 | 2000 | 70 | 60 | 60 | 50 |
| Cooling (-) / heating (+) effect (J/g) | -18 | -23 | 40 | -18 | -182 | -111 | -121 | -39 |
| After taste | 1 | 1 | 1 | -1 | 1.3 | 1 | 1 | 1.2 |
| Digestive tolerance (g/day) | >120 | 25 | 60 | 1.2 | 35 | 10 | 20 | 20 |
| Melting point (°C) | 172 | 145 | 0 | 0 | 121 | 98 | 167 | 147 |
| Glass transition temperature (°C) | 65 | 47 | 80 | -100 | -42 | -5 | -39 | 63 |
| Solubility (g/100 g water) @ 25°C | 185 | 175 | 225 | 0.3 | 61 | 235 | 22 | 39 |
| Bulk (combination of solubility and Mw) | 100 | 100 | 100 | 0 | 50 | 100 | 20 | 50 |
| Browning | 10 | 0 | 20 | 0 | 0 | 0 | 0 | 0 |
| Moistening | 20 | 20 | 60 | 0 | 10 | 50 | 0 | 10 |

**Table 2.**

| Criteria | Sucrose | Maltitol | Soluble Fiber | SG Blend | Erythritol | Sorbitol | Mannitol | Isomalt |
|---|---|---|---|---|---|---|---|---|
| Relative Sweetness (% sucrose) | 100 | -10 | -90 | 100 | -30 | -40 | -40 | -50 |
| Cooling (-) / heating (+) effect (J/g) | 100 | -28 | 322 | 0 | -911 | -517 | 572 | -117 |
| After taste | 100 | 0 | 0 | -200 | 30 | 0 | 0 | 20 |
| Digestive tolerance (g/day) | 100 | -79 | -50 | -99 | -71 | -92 | -83 | -83 |
| Melting point (°C) | 100 | -16 | -100 | -100 | -30 | -43 | -3 | -15 |
| Glass transition temperature (°C) | 100 | -28 | 23 | -254 | -165 | -108 | -160 | -3 |
| Solubility (g/100 g water) @ 25°C | 100 | -5 | 22 | -100 | -67 | 27 | 88 | -79 |
| Bulk (combination of solubility and Mw) | 100 | 0 | 0 | -100 | -50 | 0 | 80 | -50 |
| Browning | 100 | -100 | 100 | -100 | -100 | -100 | -100 | -100 |
| Moistening | 100 | 0 | 200 | -100 | -50 | 150 | -100 | -50 |

The results shown in Tables 1 and 2 demonstrate that while several of the ingredients can replace some or all of the sweetness of sucrose, none of the ingredients alone can replace or mimic the other physical or chemical criteria of sucrose that are important when sucrose is used as an ingredient in food and beverage products. The steviol glycoside blend is the only ingredient evaluated that can replace the full sweetness of sucrose, but it has a significantly different aftertaste and, in part, due to the differences in the concentration in use compared to sucrose, will have a very different crystalline and amorphous states, solubility, browning, and moistening, meaning that the steviol glycoside blend won't have the physical, chemical and sensory properties to fully replace sucrose. Maltitol provides a good starting point for sucrose replacement given that it closely matches the crystallinity (i.e., melting point), solubility, and aftertaste properties of sucrose, but it lacks the full sweetness, digestive tolerance and browning properties of sucrose. Erythritol can be used to offset the aftertaste disadvantages of the steviol glycoside blend, but it can't be used in too high of a concentration due to its cooling effects. The soluble fiber increases digestive tolerance, browning, and moistening, but the melting point difference may result in a sticker or chewier product if used at higher concentrations. Accordingly, this modeling helps understanding of how different ingredients contribute to replacement of sucrose in food and beverage applications.

### Example 2 - Evaluation of two and three component blends

Sucrose acts as both a humectant and a plasticizer in food products. As a humectant, sucrose forms hygroscopic interactions with water and competes with biopolymers in the food product for these hygroscopic interactions. As a plasticizer, sucrose acts by softening texture and lowering viscosity by working cooperatively with water to soften biopolymers in the food product. In a bakery application, the hygroscopic activity of sucrose is observed in functions such as slow dissolution allowing for partial hydration of gluten, dissolved sucrose competes with gluten, arabinoxylans, and damaged starch for water, together with fat, it prevents fell development of a hydrated gluten network and it regulates the rate of evaporation by altering steam pressure during baking. The plasticizing effects of sucrose are observed in functions such as the dissolved sucrose providing viscosity to dough, sucrose syrup providing cohesion to dough, delaying its own dissolution as temperature rise during baking, decreasing viscosity of dough during baking as more sucrose dissolves, promoting spreading, slowing bubble growth by increasing viscosity as moisture evaporates, delaying gluten denaturation at higher temperature, preventing starch gelatinization, and setting bakery products into a glassy state rendering the exterior crispy.

The values for hygroscopicity (*χ_{eff})* and plasticizing effect (φ_{w,eff}) were evaluated as outlined in van der Sman et al. ("Universal strategy for sugar replacement in foods?" Food Hydrocolloids, 19 July 2022, 133:107966, incorporated herein by reference in its entirety). Specifically, hygroscopicity is calculated using Formula I below. As stated in the formula, *χ_{eff}* is the volume averaged interaction parameter of all sugar replaces present in the food formulation, with φ*s,i* being the volume fraction of each sugar replacer. ${χ}_{eff} = \frac{{\sum }_{i} {χ}_{i} {φ}_{s , i}}{{\sum }_{i} {φ}_{s , i}}$ (I)

The plasticizing effect is calculated using Formula II below, where φw is the regular volume fraction of water, φ*s,i* is the volume fraction of all plasticizers in the formulation, *N_{OH},w* is the number of available hydroxyl groups on water (i.e., 2), and *N_{OH,s,i}* is the number of available hydroxyl groups per molecule on the sugar replacer. ${φ}_{w , eff} = {φ}_{w} + {\sum }_{i} {φ}_{s , i} \frac{{N}_{OH , s , i}}{{N}_{OH , w}} \frac{{ν}_{w}}{{ν}_{s}}$ (II)

Hygroscopicity *(χ_{eff})* and plasticizing effect (φ_{w,eff}) of sucrose replacement compositions described by van der Sman were recalculated to confirm the fitness of the model using the reference recipe outlined in Table 3. Weight percentages of sucrose, water, and the sucrose replaces described in Table 4 are based on the total weight of the ingredients in the reference recipe.

**Table 3.**

| Ingredient | Weight (g) |
|---|---|
| Sucrose | 94.5 (18 wt%) |
| Skimmed milk powder | 2.3 |
| NaCl | 2.8 |
| Sodium bicarbonate | 2.3 |
| All-purpose shortening | 90.0 |
| High-fructose corn syrup 42% | 3.4 |
| Ammonium bicarbonate | 1.1 |
| Flour (13%) | 225 |
| Water | Variable (15 wt%) |

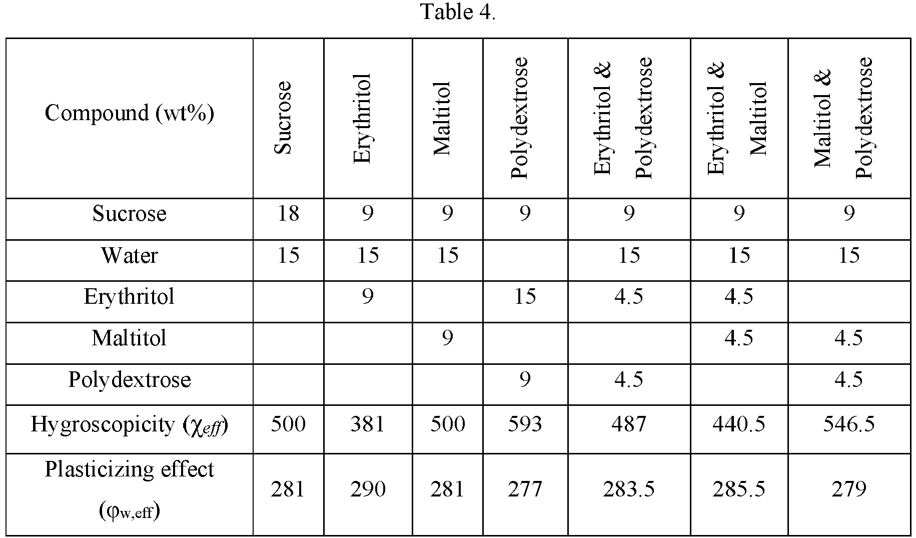

Based on the modeling outlined in Example 1, erythritol, maltitol, and soluble fiber were chosen to develop compositions that would effectively replace the physical and chemical properties, as well as some of the sensory properties, of sucrose in food applications. Three formulations were created and the hygroscopicity (*χ_{eff}*) and plasticizing effect (φ_{w,eff}) for the formulations are reported in Table 5.

**Table 5.**

| Compound | | | |
|---|---|---|---|
| Erythritol (wt%) | 11 | **20** | 29 |
| Maltitol (wt%) | 56 | **45** | 34 |
| Soluble fiber (wt%) | 33 | **35** | 37 |
| | | | |
| Hygroscopicity (χ*_{eff}*) | 433 | 509 | 500 |
| Plasticizing effect (φ_{w,eff}) | 286 | 281 | 282 |
| | | | |
| Heat of solution (J/g) | -19.8 | -32.5 | -45.6 |
| DP1 & DP2 sugars (wt%) | 3.3 | 3.5 | 3.7 |
| Relative sweetness to sucrose | 61.1 | 58.0 | 54.6 |
| Digestive tolerance (g/dose) | 28.7 | 30.5 | 32.5 |

Based on the results in Table 5, the recipe using the composition with 20 wt% erythritol, 45 wt% maltitol, and 35 wt% soluble fiber had the same hygroscopicity and plasticizing effect as the recipe with full sucrose, showing that this composition has the correct combination of properties to be an effective sucrose replacement in bakery compositions. Whatever relative sweetness is lacking compared to sucrose (about 42%) can be made up with a steviol glycoside sweetener which can be added in relatively low amount and have little effect of the physical and chemical properties evaluated.

### Example 3 - Muffins with sucrose replacements

This example demonstrates the preparation and evaluation of muffins using various sucrose replacement compositions of the present invention as well as comparative examples. Muffins were prepared using the recipe outlined in Table 6. First the egg and sweetener were mixed for 1 minute at low speed of a 3-speed mixer and 2 minutes at medium speed. The rapeseed oil and water were then added and mixing continued for 1 minute at low speed and 3 more minutes at medium speed. Next, the remaining dry ingredients (flour and baking powder) were added and mixed for 45 seconds on low speed and the bowl scrapped for another 15 seconds on high speed. Individual baking cups were filled with 55 grams of the mixture and baked at 165 °C in a rotating convection oven for 23 minutes. After the muffins cooled, they were frozen. Muffins were removed from the freezer and defrosted at room temperature for about 4 hours before sensory testing until the muffins reached a temperature of about 22 °C.

**Table 6.**

| Ingredient | Amount (g) | Amount (wt%) |
|---|---|---|
| All-purpose wheat flour | 1085.11 | 31.91 |
| Sweetener (sucrose or sucrose replacement) | 813.83 | 23.94 |
| Baking powder | 54.26 | 1.60 |
| Whole egg | 723.40 | 21.28 |
| Rapeseed oil | 542.55 | 15.96 |
| Water | 180.85 | 5.31 |

Two sucrose replacement compositions were tested in the muffin application. Both contained 20 wt% erythritol, 44.8 wt% maltitol, 35 wt% resistant dextrin, and 0.2 wt% steviol glycoside sweetener (≥85 wt% rebaudioside M and ≈3-15 wt% rebaudioside D). To prepare the powdered sucrose replacement composition, 600g of resistant dextrin was mixed with 6 g of the steviol glycoside sweetener and mixed for 20 minutes at 30 rpm. Next, 1344 g maltitol, 600g erythritol, and 750 g of resistant dextrin were added to the mixture of steviol glycoside sweetener and resistant dextrin and the combination mixed for 10 minutes at 30 rpm. This powdered sucrose replacement composition was used as the sweetener to prepare the muffins of Product 1. The second sucrose replacement composition was an agglomerated sucrose replacement composition prepared by first dissolving 4.4g of the steviol glycoside sweeteners in 962g water at 70 °C and stirring for 10 minutes at 2500 rpm and room temperature (21 ± 3°C). Next, 700 g of resistant dextrin was added to the solution with vigorous stirring. A fluid bed granulator was used to agglomerate 900g maltitol and 400g erythritol with the aqueous solution of steviol glycoside sweetener and resistant dextrin. The fluid bed granulator was operated at a flow of 7.5 g dissolved solids (ds) per minute (ds/min), a spray nozzle diameter of 0.6 mm, and the air flow and temperature modulated to prevent moisture accumulation and lumping. After the aqueous solution of steviol glycoside sweetener and resistant dextrin was fully applied to the maltitol and erythritol, the resulting product was cooled to room temperature (21 ± 3°C) and passed over a 2mm sieve.

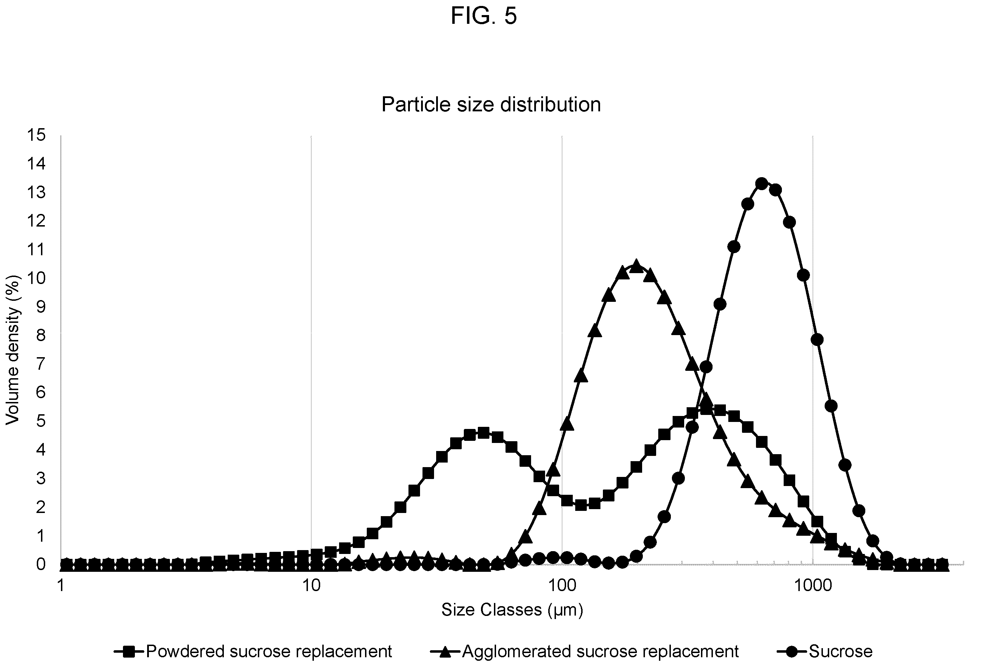

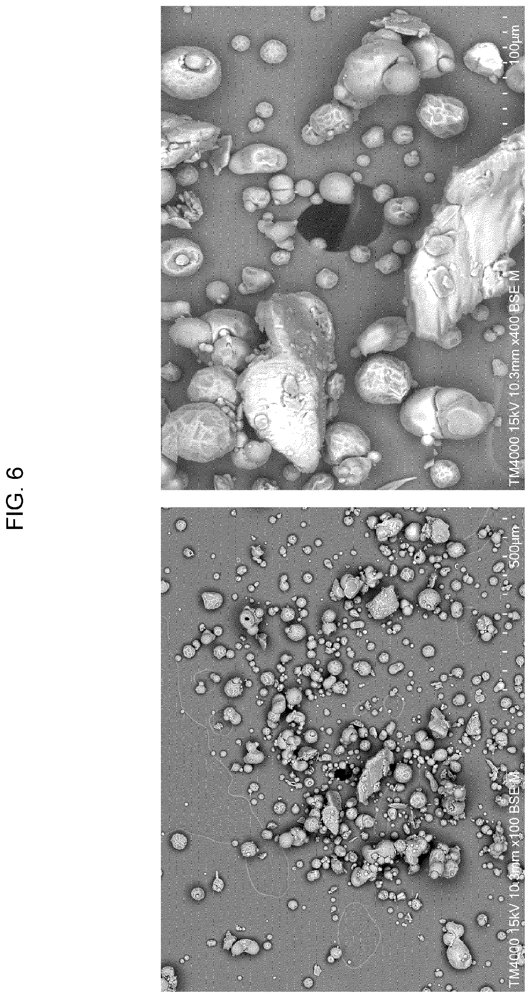

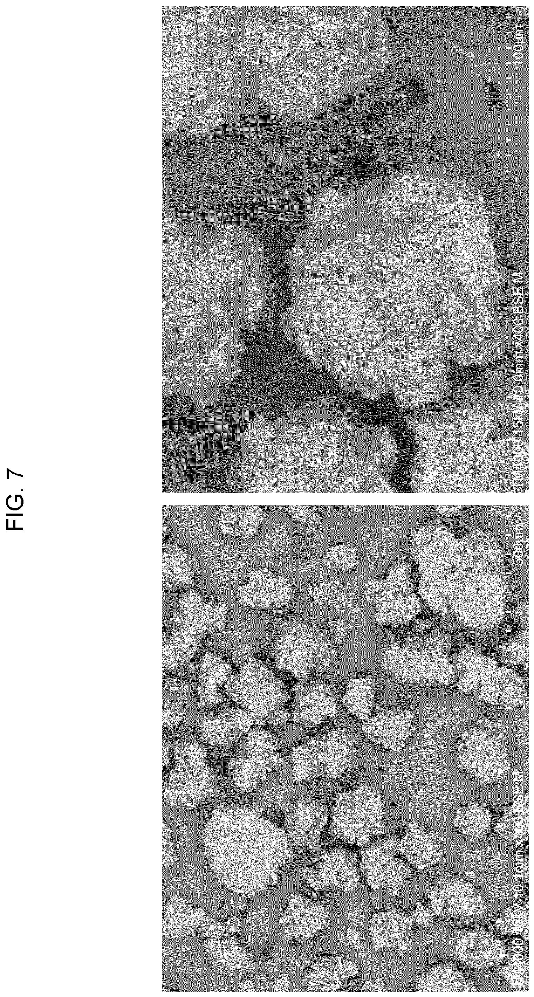

Particle size distribution of sucrose, the powdered sucrose replacement composition, and the agglomerated sucrose replacement composition was measured by laser light diffraction using a Mastersizer 3000 system using the settings described in Table 7 and the results are reported in Table 8 and FIG. 5, with the particle size being a distribution of the equivalent diameter measured in µm. In Table 8, D10, D50, and D90 refer to the particle sizes (in µm) corresponding to 10%, 50%, and 90% of the sample, respectively. In other words, 10% of the sample has a particle size less than the D10 value in Table 8, 50% of the sample has a particle size less than the D50 value in Table 8, and 90% of the sample has a particle size less than the D90 value in Table 8. The powdered sucrose replacement composition and the agglomerated sucrose replacement composition were also imaged using scanning electron microscopy at 100x and 400x magnification, as shown in FIG. 6 (powdered) and FIG. 7 (agglomerated).

Results show that the powdered sucrose replacement composition has a bimodal distribution of particle sizes. The agglomerated sucrose replacement composition seemed to have more consistently sized particles (i.e., less variability in particle size than powdered). Both the powdered and agglomerated sucrose replacement compositions had smaller particle sizes than sucrose.

**Table 7.**

| **Setting** | **Value** |
|---|---|
| Particle type | Non-spherical |
| Particle optical parameters | Refractive index (RI) and absorption index (AI) |
| Calculation | Mie theory |
| Background optical parameters | RI and AI of the medium (air for powder samples) |
| Feed rate | 0 to 100% |
| Air pressure | 0 to 3 bar |
| Obscuration | Range of 0.5 to 8% |
| Amount of sample | 1 to 20g added to venturi dispenser |
| Measurement duration | Time needed to measure entire sample added to dispenser |

**Table 8.**

| Sample | D10 (µm) | D50 (µm) | D90 (µm) | Laser obscuration (%) | Residual (%) | Weighted Residual (%) |
|---|---|---|---|---|---|---|
| Powdered sucrose replacement composition | 28.7 | 180 | 662 | 1.01 | 0.32 | 0.27 |
| Agglomerated sucrose replacement composition | 108 | 216 | 535 | 1.44 | 0.33 | 0.29 |
| Sucrose | 353 | 635 | 1110 | 1.13 | 0.66 | 0.64 |

In addition to the two sucrose replacement compositions of the present invention, three commercially available sucrose replacement samples were tested as comparative samples. These included Pure Via^{®} stevia plant-based sweetener, Backsüβe baking sweetener sold by Borchers, and Zusto^{®} sugar substitute.

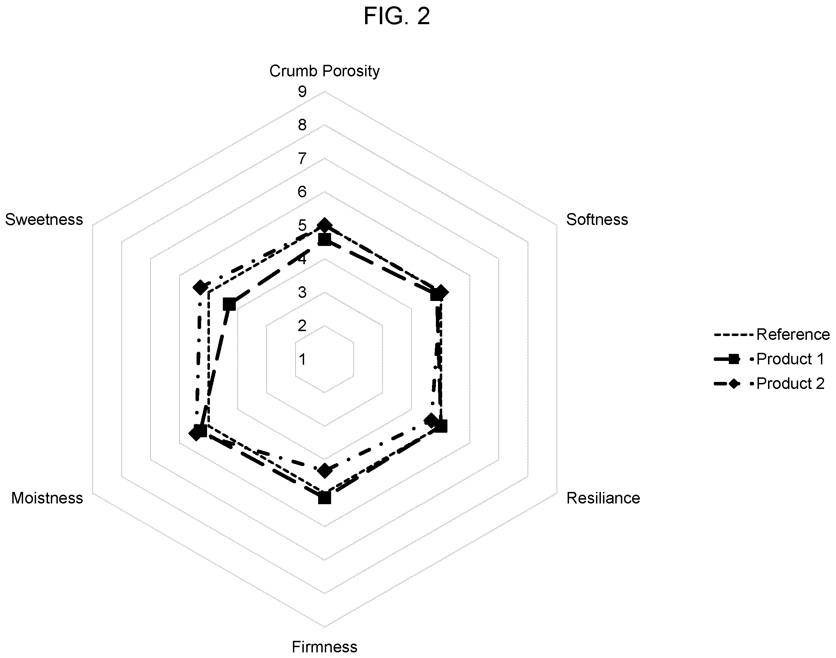

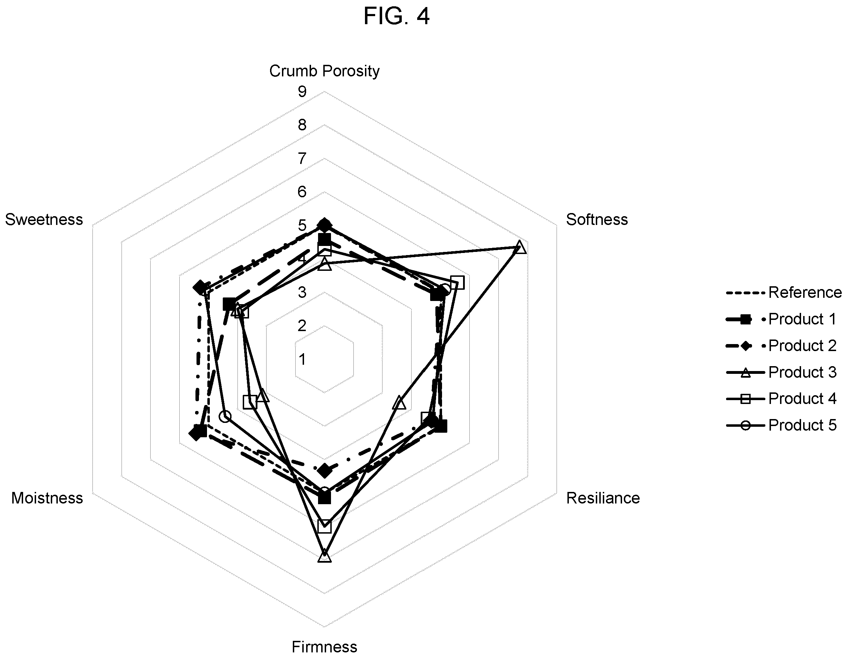

The evaluation criteria used to assess the muffin samples are outlined in Table 9. The muffins were sampled by a panel of 7 trained sensory panelists using the observation procedures outlined in Table 9. Between evaluation of samples, the panelists were able to cleanse their palates with water. Panelists scored each muffing product sample independently and individual sources were averaged. Results are shown in FIGS. 2-4 and Table 10.

**Table 9.**

| Attribute Evaluation point | Attribute | Observation procedure | Scoring | | |
|---|---|---|---|---|---|
| | | | 1-4 | 5 | 6-9 |
| Appearance | Crumb porosity | Observe the porosity of the crumb relative to the porosity of the reference | Fine/ small pores | Reference | Open structure/ big pores |
| | Color | Observe the color of the crumb relative to the color of the reference | Brighter/ Lighter | Reference | Darker |
| By touch | Firmness | Apply pressure with the fingers on the cake crumb and evaluate firmness relative to the reference | Softer | Reference | Firmer |
| | Resilience | Apply pressure with fingers on the cake crumb and evaluate how long the crumb takes to recover to the initial position | Slower | Reference | Faster |
| At bite | Firmness | While biting, evaluate the firmness relative to the reference | Softer | Reference | Firmer |
| | Moistness | While biting and chewing, evaluate the moistness relative to the reference | Dryer | Reference | Moister |
| Taste | Sweetness | Evaluate the sweetness intensity relative to the reference | Lower | Reference | Higher |

**Table 10.**

| Sample | Reference | Product 1 | | Product 2 | | Product 3 | | Product 4 | | Product 5 | |
|---|---|---|---|---|---|---|---|---|---|---|---|
| Sweetener | Sucrose Reference | Sucrose Replacement Composition | | Agglomerated Sucrose Replacement Composition | | Pure Via^{®} | | Backsüβe | | Zusto^{®} | |
| Attribute Score | | Ave | StDev | Ave | StDev | Ave | StDev | Ave | StDev | Ave | StDev |
| Crumb porosity | 5 | 4.6 | 1.3 | 5.0 | 0.8 | 3.9 | 2.3 | 4.3 | 1.1 | 5.0 | 0.8 |
| Color | 5 | 7.6 | 0.5 | 6.0 | 0.6 | 3.0 | 0.8 | 4.3 | 0.8 | 7.0 | 0.8 |
| By touch Firmness | 5 | 4.9 | 0.9 | 5.0 | 1.0 | 7.7 | 1.0 | 5.6 | 1.5 | 5.1 | 1.1 |
| By touch Resilience | 5 | 5.0 | 0.8 | 4.7 | 0.8 | 3.6 | 2.4 | 4.6 | 1.3 | 4.7 | 0.8 |
| At bite Firmness | 5 | 5.1 | 0.7 | 4.3 | 0.8 | 6.9 | 1.9 | 6.0 | 1.2 | 5.0 | 0.8 |
| At bite Moistness | 5 | 5.3 | 0.8 | 5.4 | 0.8 | 3.1 | 1.8 | 3.6 | 1.0 | 4.4 | 0.5 |
| Sweetness | 5 | 4.3 | 1.0 | 5.3 | 1.0 | 4.0 | 1.6 | 3.9 | 0.9 | 5.1 | 1.1 |

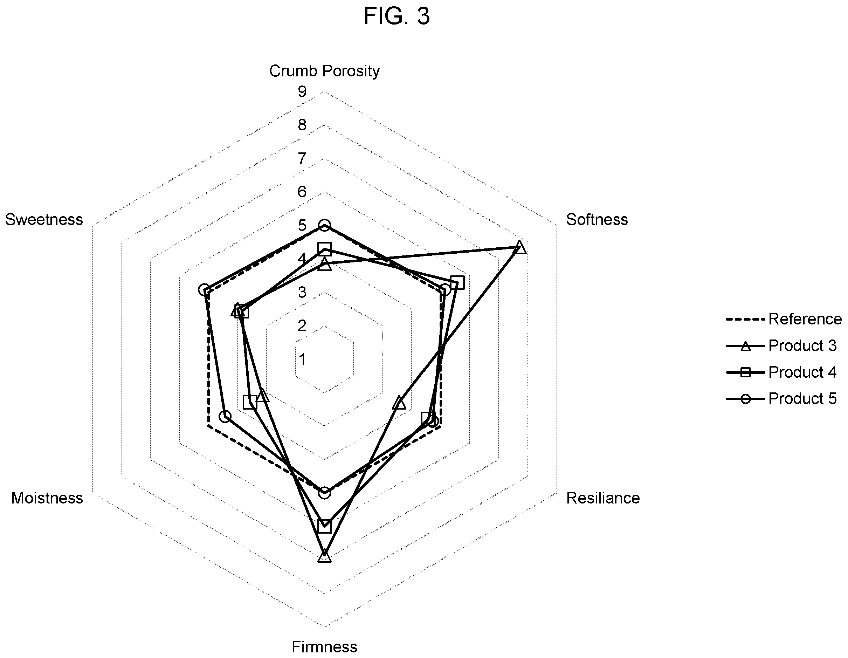

Results show the that the sucrose replacement composition and the agglomerated sucrose replacement composition used in muffin product 1 and product 2, respectively, resulted in muffins with crumb porosity, by touch firmness, by touch resilience, at bite firmness, at bite moistness, and sweetness nearly identical to the muffins prepared with sucrose (reference product). As shown in FIG. 2, the spider chart lines for muffin products 1 and 2 show significant overlap of the spider chart line for the sucrose reference. In contrast, the muffins prepared with the three commercially available sucrose replacements, products 3, 4, and 5, had significantly different sensory properties and attributes. As shown in FIG. 3, wherein no overlap in the spider chart lines for products 3, 4, and 5 with the sucrose reference sample. The data demonstrate that the sucrose replacement compositions described herein can be used as a 1:1 replacement for sucrose in bakery applications like muffins and resulting products will have nearly identical sensory properties and attributes.

## Claims

1. A sucrose replacement composition comprising
15 wt% - 25 wt% erythritol;
40 wt% - 50 wt% maltitol;
34 wt% - 36 wt% soluble fiber; and
0.1 wt% - 0.25 wt% steviol glycoside.

2. The composition of claim 1, wherein when used in a bakery product in place of sucrose, the bakery product has the same sweetness, crumb porosity, softness, resilience, bite firmness, and/or moistness as an equivalent bakery product prepared with sucrose.

3. The composition of any preceding claim, wherein the composition comprises or consists essentially of
19 wt% to 21 wt%, preferably about 20wt%, erythritol;
44 wt% to 46 wt%, preferably about 45wt%, maltitol;
about 35 wt% soluble fiber; and
about 0.2 wt% steviol glycoside.

4. The composition of any preceding claim, wherein the steviol glycoside comprises rebaudioside M, rebaudioside D, rebaudioside A, rebaudioside B, rebaudioside C, stevioside, or combinations thereof.

5. The composition of any preceding claim, wherein the steviol glycoside comprises a blend of rebaudioside D and rebaudioside M, preferably wherein rebaudioside D and rebaudioside M are at least 80 wt%, at least 85 wt%, at least 90 wt%, or at least 95% of total steviol glycosides in the sucrose replacement composition.

6. The composition of any preceding claim,
wherein the soluble fiber comprises at least 70 wt% fiber; and/or
wherein the soluble fiber comprises 0 wt% to less than 15 wt% of residual sugars with a degree of polymerization of 1 or 2 (DP1 or DP2); and/or
wherein the soluble fiber comprises about 15 wt% to about 30 wt% digestible sugars with a degree of polymerization of 3 or higher (DP ≥3); and/or
wherein the soluble fiber is selected from the group consisting of resistant dextrin, polydextrose, inulin, fructo-oligosaccharides, galacto-oligosaccharides, mannan oligosaccharides, and combinations thereof.

7. The composition of any preceding claim, wherein the soluble fiber comprises resistant dextrin.

8. The composition of any preceding claim, wherein the composition is
a powdered mixture, wherein at least 10% by volume of particles in the mixture have a particle size less than about 30 µm, at least 50% by volume of the particles in the mixture have a particle size less than about 180 µm, and/or at least 90% by volume of the particles in the mixture have a particle size less than about 670 µm; or
in the form of agglomerated granules, wherein at least 10% by volume of the particles have a particle size less than about 110 µm, at least 50% by volume of the particles have a particle size less than about 220 µm, and/or at least 90% by volume of the particles have a particle size less than about 540 µm.

9. A bakery product comprising the sucrose replacement composition of any preceding claim.

10. The bakery product of claim 9, wherein the bakery product comprises flour, salt (e.g. NaCl, KCl), a leavening agent (e.g., baking powder, baking soda, ammonium bicarbonate), yeast, egg, oil and/or fat, milk or milk replacers, flavorings, extracts, inclusions, or combinations thereof.

11. The bakery product of claim 9 or claim 10, wherein the bakery product is selected from the group consisting of a pie, a bread, a cake, a muffin, a bun, a donut, a waffle, a pastry, a pretzel, a biscuit, a biscuit sandwich, a sandwich cookie, a pie cookie, an extruded cookie, a puff pastry, a croissant, a brioche, and a crepe.

12. Use of the sucrose replacement composition of any one of claims 1-7 as a replacement for sucrose in a bakery product.

13. The use of claim 12, wherein the sucrose replacement composition can be used as a one-for-one weight replacement of sucrose in the bakery composition and no other sweeteners or bulking agents need to be added to replace the physical, chemical, or sensory properties of sucrose in the bakery product.
